(19) **Europäisches Patentamt**

**European Patent Office**

**Office européen des brevets**

(11) Veröffentlichungsnummer: **0 302 224 B1**

(12) # EUROPÄISCHE PATENTSCHRIFT

(45) Veröffentlichungstag der Patentschrift: **26.08.92**

(21) Anmeldenummer: **88110390.7**

(22) Anmeldetag: **29.06.88**

(51) Int. Cl.⁵: **C01B 17/775**, C01B 17/80

(54) Verfahren und Vorrichtung zur elektrochemischen, katalytischen Oxidation von Schwefeldioxid zu Schwefelsäure.

(30) Priorität: **06.08.87 BG 80864/87**

(43) Veröffentlichungstag der Anmeldung:
**08.02.89 Patentblatt 89/06**

(45) Bekanntmachung des Hinweises auf die
Patenterteilung:
**26.08.92 Patentblatt 92/35**

(84) Benannte Vertragsstaaten:
**AT BE CH DE ES FR GB IT LI NL SE**

(56) Entgegenhaltungen:
**EP-A- 0 115 879      DE-A- 2 320 537
DE-A- 2 946 645      DE-B- 1 212 903
DE-B- 1 227 434      US-A- 4 042 668**

(73) Patentinhaber: **ZLEHIT (ZENTRALNA LABORA-
TORIA PO ELEKTROCHIMICHESKI IZTOCH-
NITZI NA TOK)
Akademik Bontchev Str. Block 10
Sofia(BG)**

(72) Erfinder: **Budevski, Evgeni Bogdanov
Boul. Samokov No. 82
Sofia(BG)**
Erfinder: **Donchev, Todor Vitanov
Boul. Lenin, Block 113-B**
**Sofia(BG)**
Erfinder: **Naydenov, Vesselin Bojidarov
Komplex Nadejda-1, Block 143-2
Sofia(BG)**
Erfinder: **Nikolov, Ivan Pavlov
Komplex Lyulin, Block 407-4
Sofia(BG)**
Erfinder: **Petrov, Konstantin Mavrudiev
Hemus Street, Block 45-51-B
Sofia(BG)**
Erfinder: **Hristov, Hristo Ivanov
Komplex Tolstoy, Block 68-D
Sofia(BG)**

(74) Vertreter: **von Füner, Alexander, Dr. et al
Patentanwälte v. Füner, Ebbinghaus, Finck
Mariahilfplatz 2 & 3
W-8000 München 90(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren und eine Vorrichtung zur elektrochemischen, katalytischen Oxidation von Schwefeldioxid, die sowohl zur Erzeugung oder Produktion von Schwefelsäure aus Schewefeldioxid und aus Schwefeldioxid enthaltenden Gasen aus verschiedenen Quellen oder aus Quellen mit höherer und konstanter Konzentration von Schwefeldioxid, als auch zur Reinigung von Rauchgasen und anderen Schwefeldioxid enthaltenden Abgasen Verwendung finden.

Die bekannten Verfahren und Vorrichtungen zur Oxidation von Schwefeldioxid können nach ihrem Zweck in zwei Gruppen eingeteilt werden: 1. zur Erzeugung von Schwefelsäure und 2. zur Reinigung der Abfallgase von Schwefeldioxid.

Zur ersten Gruppe zählen hauptsächlich Vorrichtungen, die aufgrund des klassischen Verfahrens zur Herstellung von Schwefelsäure gebaut sind, d.h. katalytische Oxidation von Schwefeldioxid auf Platin oder Vanadiumoxiden bei 400 bis 600°C (DE-PS 33 03 289). Als Nachteile dieser Vorrichtung gelten die Verwendung von großen Mengen an teuren Katalysatoren und die Arbeit bei hohen Temperaturen mit stark aggressiven chemischen Verbindungen. Diese Vorrichtungen stellen Großanlagen dar, die eine hohe Kapitalinvestition erfordern und nur bei Vorhandensein einer Quelle mit großem und konstantem Gehalt an Schwefeldioxid mit Konzentrationen nicht unter 2 bis 4 Gew.-% rentabel sind.

In der zweiten Gruppe ist die Vielfältigkeit größer. Hier sind Verfahren eingeschlossen, bei welchen außer den erwähnten Katalysatoren auch Alkalireaktionsmittel (als Pulver oder Lösungen), Redoxpaare ,Ozon, Manganchelatverbindungen auf der Basis von Beta-Diketon und Aktivkohle (DE-PS 23 20 537 und US-PS 4 042 668) verwendet werden. Die Reaktoren, in denen diese Verfahren durchgeführt werden, sind großdimensionierte Adsorber und Kontaktsäulen. Als Nachteil dieser Verfahren, in denen Alkalireaktionsmittel und Redoxpaare verwendet werden, gilt die Notwendigkeit zur Regenerierung der Reaktionsmittel oder die Produktion von niederwertigen Produkten in großen Mengen, und bei den Verfahren auf der Basis von heterogenen katalytischen Prozessen die niedrige Geschwindigkeit der Oxidation von Schwefeldioxid. Das ist z.B. der Fall bei der Reinigung von schwefeldioxid- und sauerstoffhaltigen Gasgemischen mittels ihrer Durchleitung über nichthydrophobisierte Aktivkohle (DE-PS 23 20 537), bei der nur mit der katalytischen Aktivität und der Hydrophobie von normaler, unbehandelter Aktivkohle gerechnet wird. Derselbe Fall ist auch bei Durchleitung durch eine Suspension einer Chelatverbindung, die aus $Mn^{+2}$ und Acetylaceton hergestellt ist (US-PS 4 042 668). Wegen der niedrigen Geschwindigkeit des Verfahrens darf in beiden Fällen die Konzentration des Schwefeldioxides in den zu reinigenden Gasen 0,4 Vol.-% nicht überschreiten.

Der Erfindung liegt die Aufgabe zugrunde, ein Verfahren und eine Vorrichtung zur Oxidation von Schwefeldioxid zu Schwefelsäure bei niedrigen Temperaturen, hohem Konversionsgrad und hohen Geschwindigkeiten des Gasgemisches zu entwickeln, welches unter niedrigem (normalem) Druck und ohne Verwendung von teuren Anlagen und Reaktionsmitteln, die eine Regenerierung erfordern und ohne oder nur mit minimalen Mengen von seltenen und teuren Katalysatoren eingesetzt werden kann.

Diese Aufgabe wird durch ein Verfahren zur elektrochemischen, katalytischen Oxidation von Schwefeldioxid zu Schwefelsäure durch gleichzeitiges Kontaktieren eines Gasgemisches mit einem Schwefeldioxidgehalt von 0,01 bis 50 Vol.-% und Sauerstoff mit Wasser oder einer schwefelsauren Lösung mit einer Konzentration bis zu 80 Gew.-% auf einem Katalysator gelöst, wobei der Katalysator eine mit einer katalytisch wirksamen Substanz beladene Aktivkohle ist, und mit einer hydrophoben Polymerverbindung oder eines Gemisch aus hydrophoben Polymerverbindungen bei einem Verhältnis von Katalysator:Hydrophobisierungsmittel von 25:1 bis 1:4 und einer Reaktionstemperatur von 10 bis 80°C hydrophobisiert ist.

Die Aktivkohle kann mit Metallkomplexen von organischen Verbindungen, wie Porphyrine, Anulene, Phthalocyanine usw., oder Produkten ihrer thermischen Zersetzung oder Platin, Palladium oder Rhodium, letztere in Mengen von 0,1 bis 1 Gew.-%, versehen versehen werden.

Der Katalysator wird mittels hydrophober Polymerverbindungen, wie Polytetrafluorethylen, Polyisobutylen, Polyethylen, Polypropylen oder Polytrichlorfluorethylen hydrophobisiert.

Diese Aufgabe wird auch durch eine Vorrichtung zur Durchführung des obigen Verfahrens gelöst, in welcher der hydrophobisierte Katalysator aus einer porösen katalytischen Schicht besteht, die auf Blätter aus hydrophilem Fasergrund oder porösem Grund, der eine hydrophile Raummatrix zum Aufhalten und Abfließen der Säure bildet, aufgetragen wird. Die auf diese Weise erhaltenen katalytischen Blätter sind so angeordnet, daß zwischen ihnen Gaskanäle gebildet werden, deren konstantes Volumen mittels säurebeständigen Distanzelementen (Separatoren) gesichert wird. Die oberen Enden der katalytischen Blätter sind so im unteren Teil einer die Säure enthaltenden Wanne angeordnet, daß eine ununterbrochene Lösungszugabe zu den katalytischen Blättern gesichert wird.

Die hydrophile Matrix, die einen Freiraum für die entlang der katalytischen Blätter fließende Säure bildet, besteht aus säurebeständigem Fasermaterial oder porösem Material, z.B. aus nicht gewebtem Textilstoff, gewebtem Textilstoff, Asbeststoff, Asbestkarton, Glaswolle oder aus einem anderen passenden Material.

Die Separatoren, die den Freiraum für die Gaskanäle sichern, sind perforierte und gefaltete Kunststoffblätter oder Kunststoffbauteile, die mit Rippen oder Dornen versehen sind, welche einen niedrigen Widerstand für den Gasstrom bilden.

Die elektrochemische, katalytische Oxidation von Schwefeldioxid zu Schwefelsäure unter gleichzeitiger Teilnahme von Sauerstoff und Wasser, verläuft in den porösen Schichten des hydrophobisierten Katalysators, der die flüssige Phase von der Gasphase trennt.

Die Vorrichtung kann nicht nur einzeln, sondern auch als Anlage aus zwei oder mehreren Einheiten gebaut werden, was eine unbegrenzte Vergrößerung der Reinigungsanlage erlaubt, wobei die Einheiten senkrecht, waagerecht, einzeln oder gruppenweise, entsprechend den spezifischen Bedingungen und Anforderungen verbunden sind.

Bei der einen Variante der Konstruktion der Einheiten wird der Gasstrom von unten in die Kammer zugeführt, und die von oben zugeführte flüssige Phase fließt im Gegenstrom entlang der hydrophilen Matrix herab.

In diesem Fall befindet sich der Austritt der gereinigten Gase in der Verteilungswanne. Diese Konstruktionsvariante ist vorteilhaft bei senkrechter Anordnung der einzelnen Einheiten. Die obere Verteilungswanne sowie die untere Wanne zur Aufnahme der Säure sollen so geplant sein, daß sie den freien Durchfluß des Gasstromes sichern.

Bei einer weiteren Variante der Konstruktion strömt das Gas senkrecht zu der flüssigen Phase entlang der katalyschen Blätter in die Reaktorkammer an der einen Seite ein und an der anderen Seite aus. Diese Konstruktionsvariante hat den Vorzug bei waagerechter Anordnung der Einheiten. Bei der waagerechten Anordnung wird die Säure aus der unteren Kollektorwanne ausgepumpt und in die obere Verteilungswanne in die Gesstromrichtung der vorhergehenden Einheit geführt, wobei auf diese weise die Gasphase und die flüssige Phase im Gegenstrom fließen.

Das Verfahren und die Vorrichtung gemäß der Erfindung weisen folgende Vorteile auf:
- Das Verfahren besitzt eine ausreichende Intensität, damit diese Methode
  a) bei der Herstellung von Schwefelsäure unter Verwendung von Schwefeldioxid aus verschiedenen Quellen oder aus Quellen mit höherer und konstanter Konzentration von Schwefeldioxid,
  b) bei Verwertung verdünnter Abfallösungen der Schwefelsäure durch Wiederherstellung der Ausgangskonzentration und
  c) zur Reinigung von Rauchgasen und Abfallgasen mit einem Schwefeldioxidgehalt angewendet werden kann.
- Zur Durchführung dieses Verfahrens werden keine teuren Katalysatoren oder nur minimale Mengen davon benötigt.
- Die erfindungsgemäß verwendeten Katalysatoren sind beständig und können lange Zeit eingesetzt werden.
- Das Verfahren verläuft bei niedrigen Temperaturen (10 bis 80°C), was die Verwendung von konstruktiven Kunststoffen erlaubt, wodurch die Investitionen zum Bau und zur Pflege der Vorrichtung wesentlich reduziert werden.
- Die Konstruktion der Vorrichtung erlaubt den Betrieb bei Lineargeschwindigkeiten des Gases von mehr als 1 m/sec und bei kleinen aerodynamischen Widerständen, was zur Reinigung von Rauchgasen bei Fernheizwerken und von Abfallgasen mit mittlerem bis niedrigem Schwefeldioxidgehalt aus der chemischen Industrie notwendig ist.
- Die Vorrichtung weist eine vereinfachte Konstruktion auf und bleibt auch betriebsfähig, falls bei mechanischen Beschädigungen der katalytischen Blätter der Elektrolyt in die Gaskanäle tropft.
- Die Verwendung von hydrophilem Fasergrund oder porösem Grund, der die flüssige Phase aufhält, sichert einen wirksamen Betrieb mit kleinem Säurevolumen.
- Die Konstruktion in Form mehrerer Einheiten erlaubt eine unbeschränkte Erweiterung der Anlage. Die Variante mit vertikalem Phasendurchfluß im Gegenstrom ist vorteilhaft bei einer senkrechten Anordnung der Einheiten, und die Variante mit senkrecht zueinander fließenden Phasen ist vorteilhaft bei der waagerechten Anordnung der Einheiten.

Beispiel 1

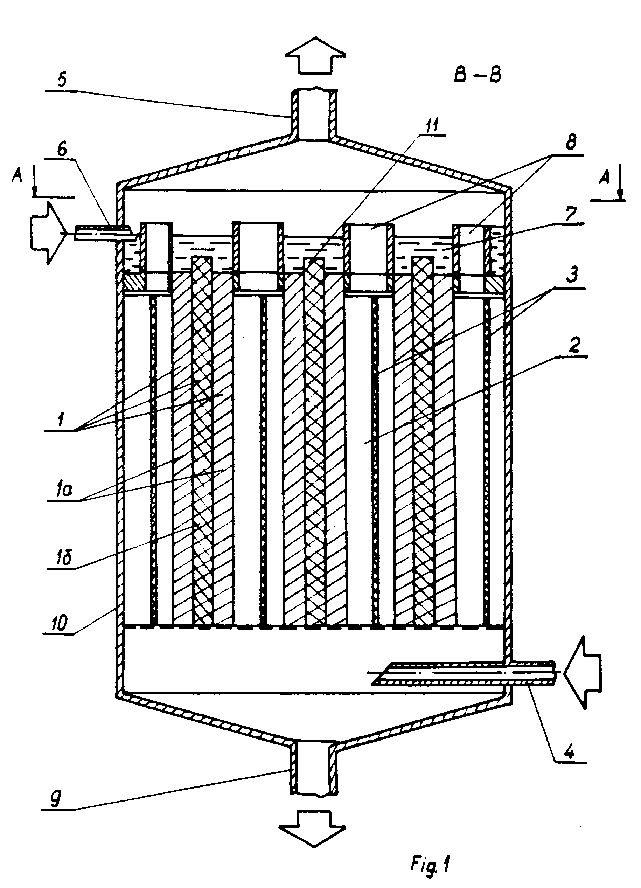

Der Querschnitt einer Variante der erfindungsgemäßen Vorrichtung mit senkrechtem Phasendurchfluß im Gegenstrom, ist in Fig. 1 dargestellt. Mit 1 sind die katalytischen Blätter bezeichnet, mit 1a die porösen Schichten aus hydrophobisiertem Katalysator, mit 1b die hydrophile Fasermatrix oder die poröse Matrix, mit 3 die Distanzelemente, mit 4 der Eingang des Gasgemisches mit einem Schwefeldioxidgehalt, mit 5 der Ausgang der gereinigten Gase, mit 6 der Eingang der in die Vorrichtung eintretenden Säure, mit 7 die Verteilungswanne für die Säure, mit 11 die katalytischen Blätter mit katalysatorfreien Enden ohne Katalysator, die in den Schlitzen am Boden der Wanne 7 angeordnet sind, mit 8 die Kanäle zum Durchfließen des Gases durch die Verteilungswanne 7, mit 9 der Ausgang der Säure aus der Vorrichtung, mit 10 das säurebeständige Gehäuse der Vorrichtung.

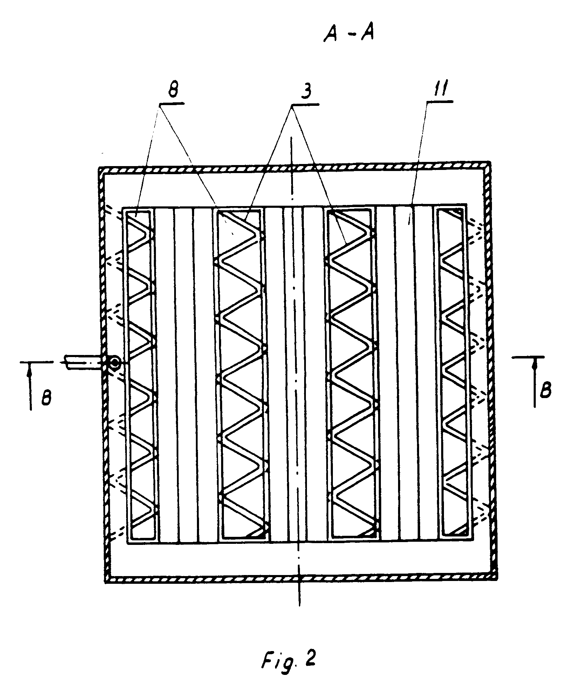

In Fig. 2 ist die Verteilungswanne 7 dargestellt. Darin sind die Enden der katalytischen Blätter 11 frei von Katalysator. Mit 8 sind die Kanäle zum Durchgang des Gases und mit 3 die Distanzelemente bezeichnet.

Wenn diese Einheit der Vorrichtung mit 6 katalytischen Bändern mit Abmessungen von 30x6 cm ausgerüstet ist, die als Katalysator eine mit den pyrolitischen Produkten eines Phthalocyaninmetallkomplexes beladene Aktivkohle, hydrophobisiert mit Polytetrafluorethylen bei einem Verhältnis von Katalysator:Hydrophobisierungsmittel von 3:1, enthalten, kann die Vorrichtung den Schwefeldioxidgehalt im Gasgemisch, der am Eingang mit einer Geschwindigkeit von 0,1 m/sec eintritt, von 0,8 bis 1 Vol.-% auf 0,3 bis 0,5 Vol.-% reduzieren, d.h. der Reinigungsgrad beträgt bei einmaligem Durchfluß 50%. Nach sechsstündigem Betrieb der Vorrichtung unter diesen Bedingungen bei einer Reaktionstemperatur von 30 bis 40°C, erreicht die Konzentration von 1,4 l 0,1 N Säure, die mit Hilfe einer peristaltischen Pumpe zirkuliert, bei zu 2,6 N. Die Vorrichtung dieses Typs war bis jetzt 6000 Stunden ohne Verschlechterung der Charakteristika in Betrieb.

Beispiel 2

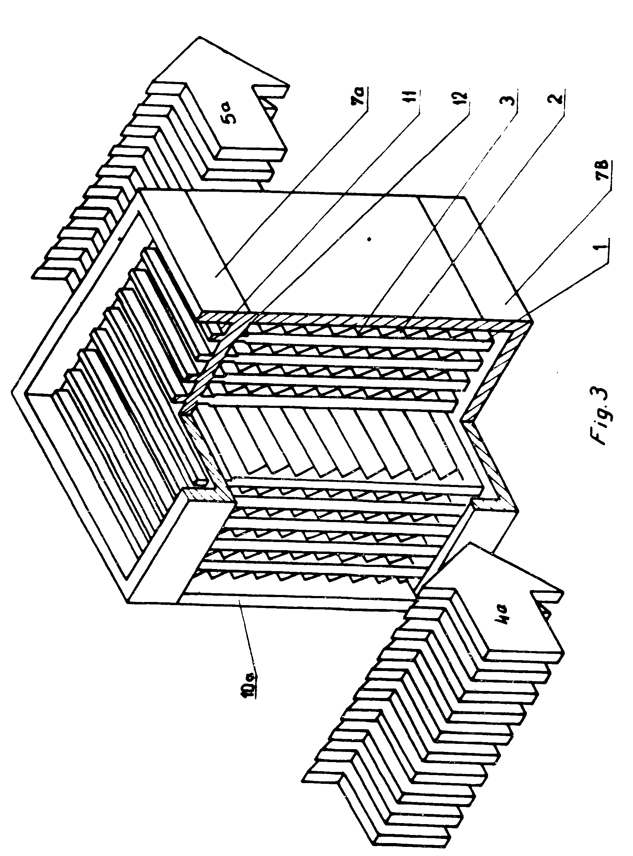

Die Variante der erfindungsgemäßen Vorrichtung mit senkrechtem Phasenverlauf ist in Fig. 3 in axonometrischer Projektion dargestellt. In Fig. 3 sind mit 1 die katalytischen Blätter bezeichnet, mit 11 deren katalysatorfreie Enden, mit 2 die zwischen den Blättern gebildeten Gaskanäle, mit 3 die Distanzelemente, mit 7a die obere Verteilungswanne, mit 12 der Wannenboden mit Schlitzen für die Enden der katalytischen Blätter, mit 7b die untere Sammelwanne für die Säure, 4a und 5a stellen die Pfeile dar, die den Eingang und den Ausgang des Gases kennzeichnen, mit 10a ist die tragende Konstruktion der Vorrichtung bezeichnet.

Die Einheit mit senkrechtem Phasenverlauf arbeitet unter den in Beispiel 1 beschriebenen Bedingungen. Die erhaltenen Ergebnisse sind analog zu den in Beispiel 1 erzielten.

Beispiel 3

Das Beispiel unterscheidet sich von Beispiel 1 dadurch, daß vier Einheiten wie in Beispiel 1 beschrieben kaskadenartig miteinander verbunden sind. Unter ähnlichen Arbeitsbedingungen, die analog zu den in Beispiel 1 genannten sind, verläßt das Gasgemisch die letzte Einheit mit einem Schwefeldioxidgehalt von 0,05 bis 0,06 Vol.-%.

Beispiel 4

Das Beispiel unterscheidet sich von Beispiel 1 dadurch, daß die Vorrichtung mit 10 katalytischen Bändern mit größeren Abmessungen (75x8 cm) ausgerüstet ist und der Katalysator wie in Beispiel 1 beschrieben mit Polytetrafluorethylen bei einem Verhältnis von Katalysator:Hydrophobisierungsmittel von 10:1 hydrophobisiert ist.

Das Gasgemisch, das am Eingang mit einer Geschwindigkeit von 0,1 m/sec eintritt, enthält 0,27 bis 0,3 Vol.-% Schwefeldioxid. Die Reaktionstemperatur beträgt 30 bis 40°C. Am Ausgang der Vorrichtung beträgt der Schwefeldioxidgehalt 0,01 bis 0,015 Vol.-%; der Reinigungsgrad bei einmaligem Durchlauf beträgt 92 bis 95%.

Beispiel 5

Das Beispiel unterscheidet sich von Beispiel 1 dadurch, daß die Aktivkohle mit Metallkomplexen des Dibenzoazoanulens versehen ist und als Hydrophobisierungsmittel Polyethylen verwendet wird. Der Schwefeldioxidgehalt im Gasgemisch am Eingang der Vorrichtung beträgt 0,8 bis 1 Vol.-% und am Ausgang 0,3 bis 0,4 Vol.-% bei einer Gasgeschwindigkeit von 0,1 m/sec.

Beispiel 6

Das Beispiel unterscheidet sich von Beispiel 1 dadurch, daß die Aktivkohle mit 0,6 Gew.-% Platin versehen und mit Polytetrafluorethylen bei einem Verhältnis von Katalysator:Hydrophobisierungsmittel von 3:1 hydrophobisiert ist; das Gasgemisch am Eingang der Vorrichtung enthält 12 bis 13 Vol.-% Schwefeldioxid. Die Anfangskonzentration der in der Vorrichtung zirkulierenden Säure beträgt 20 Gew.-%. Die Produktionsleistung der Vorrichtung unter diesen Bedingungen beträgt 6 bis 8 kg Schwefelsäure pro $m^2$ Fläche der katalytischen Bänder in 24 Stunden (oder 13 bis 17 kg Schwefelsäure pro kg Katalysator in 24 Stunden).

Beispiel 7

Das Beispiel unterscheidet sich von Beispiel 1 dadurch, daß die Aktivkohle mit einem Metallkomplex von Phenylporphyrin versehen und mit Polytetrafluorethylen bei einem Verhältnis von Katalysator:Hydrophobisierungsmittel von 3:1 hydrophobisiert ist. Der Schwefeldioxidgehalt am Eingang der Vorrichtung beträgt 0,8 bis 1 Vol.-% und am Ausgang 0,3 bis 0,4 Vol.-% bei einer Gasgeschwindigkeit von 0,1 m/sec.

Beispiel 8

Das Beispiel unterscheidet sich von Beispiel 1 dadurch, daß die Vorrichtung mit katalytischen Bändern ausgerüstet ist und die Aktivkohle mit Polytetrafluorethylen bei einem Verhältnis von Katalysator:Hydrophobisierungsmittel von 1:2 hydrophobisiert ist. Der Schwefeldioxidgehalt am Eingang der Vorrichtung beträgt 0,8 bis 1 Vol.-% und am Ausgang 0:5 bis 0,6 Vol.-% bei einer Gasgeschwindigkeit von 0,065 m/sec.

**Patentansprüche**

1. Verfahren zur elektrochemischen, katalytischen Oxidation von Schwefeldioxid zu Schwefelsäure durch gleichzeitiges Kontaktieren eines Gasgemisches mit eines Schwefeldioxidgehalt von 0,01 bis 50 Vol.-% und Sauerstoff mit Wasser oder einer schwefelsauren Lösung mit einer Konzentration bis zu 80 Gew.-% auf einem Katalysator, **dadurch gekennzeichnet,** daß der Katalysator eine mit einem katalytisch wirksamen Substanz beladene Aktivkohle ist und mit einer hydrophoben Polymerverbindung oder eines Gemisch aus hydrophoben Polymerverbindungen bei eines Verhältnis von Katalysator:Hydrophobisierungsmittel von 25:1 bis 1:4 hydrophobisiert ist und die Reaktionstemperatur der $SO_2$-Oxidation von 10 bis 80 °C beträgt.

2. Verfahren nach Anspruch 1, **dadurch gekennzeichnet,** daß die Aktivkohle mit Metallkomplexen von organischen Verbindungen, wie Porphyrine, Anulene, Phtalocyanine, oder mit Produkten ihrer thermischen Zersetzung als Katalysator versehen ist.

3. Verfahren nach Anspruch 1, **dadurch gekennzeichnet,** daß die Aktivkohle mit Platin, Palladium oder Rhodium in Mengen von 0,1 bis 1 Gew.-% versehen ist.

4. Verfahren nach einem der Ansprüche 1 bis 3, **dadurch gekennzeichnet,** daß der Katalysator mittels Polytetrafluorethylen, Polyisobutylen, Polyethylen, Polypropylen, Polytrichlorfluorethylen oder deren Gemische hydrophobisiert ist.

5. Vorrichtung zur Durchführung des Verfahrens zur elektrochemischen, katalytischen Oxidation von Schwefeldioxid zu Schwefelsäure nach einem der Ansprüche 1 bis 4, **dadurch gekennzeichnet,** daß sie aus hydrophobisiertem Katalysator in Form einer porösen, katalytischen Schicht (1a) besteht, die auf Blätter aus einem hydrophilen Fasergrund oder porösen Grund (1b) aufgetragen ist, wobei dieser Grund (1b) eine hydrophile Raummatrix zum Aufhalten und Abfließen der Säure bildet, und die katalytischen Blätter (1) so angeordnet sind, daß zwischen ihnen Gaskanäle (2) ausgebildet sind, deren konstantes Volumen mittels säurebeständiger Distanzelemente (3) gesichert wird, und am unteren Teil der Wanne (7), die die Säure enthält, die oberen Enden (11) der katalytischen Blätter (1) so angeordnet sind, daß die ununterbrochene Lösungszugabe zu den katalytischen Blättern (1) garantiert wird.

6. Vorrichtung nach Anspruch 5, **dadurch gekennzeichnet,** daß die hydrophile Matrix (1b), die einen Freiraum für die entlang der katalytischen Blätter fließende Säure bildet, aus säurebeständigem Fasermaterial oder porösem Material, z.B. nicht gewebtem Textilstoff, gewebtem Textilstoff, Asbeststoff, Asbestkarton, Glaswolle oder aus einem anderen passenden Material besteht.

7. Vorrichtung nach Anspruch 5, **dadurch gekennzeichnet,** daß die Gaskanäle (2) mittels Distanzelemente (3) gebildet werden, die säurebeständige, perforierte und gefaltete Kunststoffblätter oder Kunststoffbauteile darstellen, welche Rippen oder Dorne aufweisen, die einen niedrigen Widerstand für den Gasstrom bilden.

8. Vorrichtung nach Anspruch 5, **dadurch gekennzeichnet,** daß jede Vorrichtung nicht nur einzeln, sondern auch als Anlage aus zwei oder mehreren Einheiten hergestellt werden kann, wobei diese so untereinander verbunden sein können, daß der Eingang des Gasgemisches bei jeder folgenden Einheit mit dem Ausgang des Gases der vorausgehenden Einheit verbunden ist, und der entsprechende Eingang und der Ausgang der Säure so verbunden sein können, daß der Phasendurchfluß im Gegenstrom gesichert wird.

9. Vorrichtung nach Anspruch 5 und 8, **dadurch gekennzeichnet,** daß bei senkrechter Anordnung der Einheiten der Eingang (4) des Gasgemisches in dem unteren Teil der Vorrichtung und die Gasausgänge (5) in ihrem oberen Teil angeordnet sind.

10. Vorrichtung nach Anspruch 4, **dadurch gekennzeichnet,** daß bei waagerechter Anordnung der Einheiten der Eingang des Gasgemisches (4) im vorderen Teil der Vorrichtung in Bezug auf die Gasströmungsrichtung, und der Gasausgang (5) in ihrem hinteren Teil vorgesehen sind.

## Claims

1. Method for the electrochemical catalytic oxidation of sulphur dioxide to sulphuric acid by means of simultaneous contacting of a gas mixture, with a sulphur-dioxide content of 0.01 to 50 % by volume and oxygen, with water or a solution of sulphuric acid, with a concentration of up to 80 % by weight, on a catalyst, characterized in that the catalyst is an activated carbon loaded with a catalytically active substance and is hydrophobized with a hydrophobic polymer compound or a mixture of hydrophobic polymer compounds with a ratio of catalyst:hydrophobization means of 25:1 to 1:4 and the reaction temperature for the $SO_2$-oxidation amounts to from 10 to 80°C.

2. Method according to claim 1, characterized in that the activated carbon is provided with, as catalyst, metal complexes of organic compounds, like porphyrins, anulenes, phthalocyanines or with products of their thermal decomposition.

3. Method according to claim 1, characterized in that the activated carbon is provided with platinum, palladium or rhodium in quantities of 0.1 to 1 % by weight.

4. Method according to one of claims 1 to 3, characterized in that the catalyst is hydrophobized by means of polytetrafluoroethylene, polyisobutylene, polyethylene, polypropylene, polytrichlorofluoroethylene or mixtures thereof.

5. Apparatus for carrying out the method for the electrochemical catalytic oxidation of sulphur dioxide into sulphuric acid according to one of claims 1 to 4, characterized in that it consists of hydrophobized catalyst in the form of a porous, catalytic layer (1a) which is applied to sheets of a hydrophilic fibrous base or porous base (1b), wherein this base (1b) forms a hydrophilic space matrix for retaining and draining the acid, and the catalytic sheets (1) are arranged in such a way that gas ducts (2) are constructed between them, the constant volume of which is ensured by means of acid-resistant spacer elements (3), and, at the lower part of the tank (7) which contains the acid, the upper ends (11) of the catalytic sheets (1) are arranged in such a way that the uninterrupted addition of solution to the catalytic sheets (1) is guaranteed.

6. Apparatus according to claim 5, characterized in that the hydrophilic matrix (1b), which forms a free space for the acid flowing along the catalytic sheets, consists of acid-resistant fibrous material or porous material, for example, non-woven textile material, woven textile material, asbestos fibre, asbestos cardboard, glass wool or of another suitable material.

7. Apparatus according to claim 5, characterized in that the gas ducts (2) are formed by means of spacer elements (3) which represent acid-resistant, perforated and folded plastics sheets or plastics components, which have ribs or spines which form a low resistance for the gas flow.

8. Apparatus according to claim 5, characterized in that each apparatus can be manufactured not only individually, but also as an arrangement of two or more units, whereby these can be connected to one another in such a way that the input of the gas mixture of each subsequent unit is connected to the output of the gas of the preceding unit, and the corresponding input and the output of the acid can be connected in such a way that the phase passage in the counterflow is ensured.

9. Apparatus according to claim 5 and 8, characterized in that, in a vertical arrangement of the units, the input (4) of the gas mixture is arranged in the lower part of the device and the gas outputs (5) are arranged in its upper part.

10. Apparatus according to claim 4, characterized in that, in a horizontal arrangement of the units, the input of the gas mixture (4) is provided in the front part of the device with respect to the direction of the gas flow, and the gas output (5) is provided in its rear part.

## Revendications

1. Procédé d'oxydation catalytique, électrochimique, du dioxyde de soufre en acide sulfurique par mise en contact simultané d'un mélange gazeux ayant une teneur en dioxyde de soufre de 0,01 à 50% en volume et d'oxygène avec de l'eau ou une solution d'acide sulfurique ayant une concentration allant jusqu'à 80% en poids, sur un catalyseur, caractérisé par le fait que le catalyseur est un charbon actif chargé d'une substance catalytiquement active et est rendu hydrophobe par un composé polymère hydrophobe ou un mélange de composés polymères hydrophobes dans un rapport catalyseur : agent conférant le caractère hydrophobe de 25:1 à 1:4 et que la température de réaction de l'oxydation du $SO_2$ s'élève à une valeur de 10 à 80°C.

2. Procédé selon la revendication 1, caractérisé par le fait que le charbon actif est doté, en tant que catalyseur, de complexes métalliques de composés organiques, tels que les porphyrines, les anulènes, les phtalocyanines, ou de produits de leur décomposition thermique.

3. Procédé selon la revendication 1, caractérisé par le fait que le charbon actif est doté de platine, de palladium ou de rhodium, dans des quantités de 0,1 à 1% en poids.

4. Procédé selon l'une quelconque des revendications 1 à 3, caractérisé par le fait que le catalyseur est rendu hydrophobe à l'aide de polytétrafluoréthylène, de polyisobutylène, de polyéthylène, de polypropylène, de polytrichlorofluoroéthylène ou de leurs mélanges.

5. Dispositif pour la mise en oeuvre du procédé d'oxydation catalytique, électrochimique, de dioxyde de soufre en acide sulfurique, tel que défini à l'une quelconque des revendications 1 à 4, caractérisé par le fait qu'il se compose d'un catalyseur rendu hydrophobe sous la forme d'une couche catalytique (1a), poreuse, qui est appliquée sur des feuilles en une base fibreuse hydrophile ou une base poreuse (1b), cette base (1b) formant une matrice spatiale hydrophile pour la retenue et l'écoulement de l'acide, et que les feuilles catalytiques (1) sont disposées de telle sorte qu'entre elles sont formés des canaux de gaz (2), dont le volume constant est assuré à l'aide d'éléments d'écartement (3) résistants aux acides, et qu'à la partie inférieure de la cuve (7), laquelle contient l'acide, les extrémités supérieures (11) des feuilles catalytiques (1) sont disposées de telle sorte que soit garantie l'apport ininterrompu de solution aux feuilles catalytiques (1).

6. Dispositif selon la revendication 5, caractérisé par le fait que la matrice hydrophile (1b), qui forme un espace libre pour l'acide s'écoulant le long des feuilles catalytiques, se compose d'une matière fibreuse ou matière poreuse, résistante aux acides, par exemple, un tissu non-tissé, un tissu tissé, une matière en amiante, un carton d'amiante, de la laine de verre ou une autre matière appropriée.

7. Dispositif selon la revendication 5, caractérisé par le fait que les canaux de gaz (2) sont formés à l'aide d'éléments d'écartement (3), qui sont constitués par des feuilles en matière plastique ou des éléments de structure en matière plastique, résistants aux acides, perforés et ondulés, lesquels présentent des nervures ou des pointes, qui présentent une résistance peu élevée au courant gazeux.

8. Dispositif selon la revendication 5, caractérisé par le fait que chaque dispositif peut être fabriqué non seulement individuellement, mais aussi sous la forme d'une installation à deux unités ou davantage, celles-ci pouvant être connectées entre elles de telle sorte que l'entrée du mélange gazeux, pour chaque unité suivante, soit reliée à la sortie du gaz de l'unité précédente, et l'entrée et la sortie correspondantes pour l'acide peuvent être reliées de telle sorte que la circulation des phases soit assurée à contre-courant.

9. Dispositif selon l'une des revendications 5 et 8, caractérisé par le fait que, dans une disposition verticale des unités, l'entrée (4) du mélange gazeux est disposée à la partie inférieure du dispositif, et les sorties de gaz (5) sont disposées à sa partie supérieure.

10. Dispositif selon la revendication 4, caractérisé par le fait que, dans une disposition horizontale des unités, l'entrée (4) du mélange gazeux est prévue à la partie antérieure du dispositif par rapport à la direction du courant gazeux, et la sortie (5) de gaz est prévue à sa partie arrière.

Fig. 1

A - A

Fig. 2

Fig. 3